# FASCICULE DE BREVET EUROPEEN

(11) **EP 2 646 887 B1**
(45) Date de publication et mention de la délivrance du brevet: **09.08.2017**
(21) Numéro de dépôt: 11799791.6
(22) Date de dépôt: 28.11.2011
(51) Int. Cl.: G05D 16/16

(54) **VANNE A MODULATION DE PRESSION SECURISEE**
DRUCKMODULIERENDES SICHERHEITSVENTIL
SAFETY PRESSURE-MODULATING VALVE

(30) Priorité: 30.11.2010 FR 1059937
(43) Date de publication de la demande: 09.10.2013
(73) Titulaire: Bayard, 69330 Meyzieu (FR)
(72) Inventeur: CHEMIN, Hervé, Cyrille, Fabrice, F-38300 Ruy Montceau (FR); DUTROP, Aymeric, Tanguy, F-69005 Lyon (FR); GUILLAUMONT, Patrick, F-38670 Chasse Sur Rhone (FR); MARION, Benjamin, F-01330 Villard Les Dombes (FR)
(74) Mandataire: Martin, Didier Roland Valéry
(86) Numéro de dépôt international: PCT/FR2011/052799
(87) Numéro de publication internationale: WO 2012/072937

(56) Documents cités:
- WO-A1-99/54797
- US-A- 2 896 660
- US-A- 5 348 036
- US-A1- 2008 251 146

## Description

### DOMAINE TECHNIQUE

La présente invention concerne le domaine général des dispositifs de régulation de la pression régnant dans un réseau de distribution de fluide, et en particulier dans un réseau de distribution d'eau.

La présente invention se rapporte plus particulièrement à un dispositif de pilotage automatique pour vanne d'un réseau de distribution de fluide, ainsi qu'à une vanne pourvue d'un tel dispositif de pilotage, à un réseau d'adduction d'eau comportant une telle vanne, et enfin à un procédé de pilotage automatique de la pression dans un réseau de distribution de fluide.

### TECHNIQUE ANTERIEURE

Dans les réseaux de distribution de fluide, et notamment dans les réseaux d'addiction d'eau potable, il est nécessaire de maintenir une certaine surpression par rapport à la pression atmosphérique afin de garantir un débit suffisant aux différents points d'utilisation.

Toutefois, afin d'éviter un gaspillage par surconsommation d'eau, de préserver l'intégrité du réseau, ou de limiter les fuites, il est nécessaire d'adapter, et notamment de limiter, cette, surpression en fonction de la nature du réseau et de l'utilisation qui en est faite.

Par ailleurs, il est généralement nécessaire, pour des raisons de sécurité, de garantir en permanence la disponibilité d'une pression utile suffisante en certains points du réseau, par exemple pour l'alimentation des bornes et poteaux d'incendie.

A cet effet, il est connu de doter les vannes principales de moyens permettant de réguler la pression à leur aval, ou mieux encore de moduler ladite pression, c'est-à-dire de la réguler suivant une consigne de pression aval qui est ajustée selon le débit de tirage, la pression disponible immédiatement à l'aval de la vanne augmentant ainsi avec le débit de tirage. Ainsi, on obtient à tout moment une pression juste nécessaire et suffisante au point d'utilisation, quel que soit le débit de tirage.

Pour réaliser une telle modulation, il est notamment connu de doter les vannes d'un pilote dont la valeur de consigne est modifiée dynamiquement, en fonction du débit de tirage, au moyen d'une chambre de compensation comportant une membrane mobile qui est soumise à une pression différentielle et qui est reliée à l'équipage mobile du pilote afin de modifier dynamiquement le tarage de ce dernier.

Bien qu'ils présentent des avantages indéniables en matière de gestion et d'efficacité du réseau, de tels dispositifs de modulation présentent toutefois certains inconvénients.

En premier lieu, ils relèvent parfois de systèmes mécaniques ou électromécaniques particulièrement complexes, comprenant de nombreuses pièces mobiles fortement sollicitées par des contraintes alternées, et dont les tolérances de fabrication et d'assemblage sont particulièrement sévères eu égard à la nécessité de maintenir l'étanchéité de l'ensemble.

Or, en raison de cette complexité, ainsi que des contraintes inhérentes à leur fonctionnement, il arrive parfois que les dispositifs de modulation connus soient sujets à des défaillances, par exemple par grippage, fatigue, voire perforation ou casse d'un élément, une telle défaillance pouvant dégrader leur fonctionnement, empêcher la modulation de pression, voire bloquer la vanne en position ouverte, et ce alors même que les organes de la vanne, et notamment son clapet et son siège, sont encore parfaitement fonctionnels.

Le cas échéant, un blocage en position grande ouverte de la vanne peut avoir pour conséquence un accroissement important, incontrôlé et permanent de la pression en aval de ladite vanne, avec tous les effets préjudiciables susmentionnés.

En outre, en cas d'incident, il est nécessaire d'intervenir en urgence pour remplacer le dispositif défaillant, ce qui peut nécessiter des travaux lourds, notamment en matière de voirie et de terrassement.

Enfin, une défaillance des dispositifs connus peut parfois passer durablement inaperçue dans certains secteurs du réseau, ce qui peut retarder le diagnostic et par conséquent l'intervention de maintenance, au risque que ladite défaillance ne se manifeste qu'au moment où un tirage d'eau dans de bonnes conditions est justement nécessaire (par exemple pour lutter contre un incendie).

Le document WO-99/54797 décrit un dispositif de pilotage automatique pour vanne qui comprend un pilote principal et qui est dépourvu de tout pilote auxiliaire de sécurité.

Le document US-2,896,660 décrit un dispositif de pilotage automatique pour vanne 14 d'un réseau de distribution de fluide qui comprend un premier pilote principal et un pilote auxiliaire de sécurité. Le pilote auxiliaire intervient en cas de chute de pression et ne constitue pas un pilote de sécurité susceptible de se substituer au fonctionnement du pilote principal en cas de défaillance de ce dernier.

Le document US-2008/051146 décrit un dispositif de pilotage automatique pour vanne d'un réseau de distribution d'eau qui comprend un premier pilote principal conçu pour réguler la pression aval selon une première consigne de pression mais qui ne prévoit aucun pilote auxiliaire de sécurité.

Le document US-5,348,036 décrit un dispositif de pilotage conforme au préambule de la revendication 1 et au préambule de la revendication 16.

### EXPOSE DE L'INVENTION

Les objets assignés à la présente invention visent par conséquent à remédier aux inconvénients susmentionnés et à proposer un nouveau dispositif de pilotage automatique pour vanne d'un réseau de distribution de fluide qui permette une gestion efficace de la pression dans le réseau tout en présentant une fiabilité et une longévité améliorées.

Les objets assignés à l'invention visent également à proposer un dispositif de pilotage qui soit particulièrement robuste et capable de maintenir un service acceptable en cas de défaillance.

Un autre objet assigné à l'invention vise à proposer un nouveau dispositif de pilotage peu encombrant, de structure simple et compacte, solide, et peu onéreux à fabriquer.

Un autre objet assigné à l'invention vise à proposer un nouveau dispositif de pilotage qui permette une gestion particulièrement fine de la pression dans le réseau, adaptée à tout moment à la capacité du réseau et aux besoins des utilisateurs.

Un autre objet assigné à l'invention vise à proposer un nouveau dispositif de pilotage qui puisse être réalisé au moyen d'organes et de sous-ensembles standard.

Un autre objet assigné à l'invention vise à proposer un nouveau dispositif de pilotage qui présente de bonnes performances dynamiques, notamment en matière de temps de réponse, de précision, et de stabilité.

Un autre objet assigné à l'invention vise à proposer un dispositif de pilotage à sécurité passive permettant de limiter voire d'empêcher l'apparition de dégâts liés à une surpression en aval de la vanne équipée.

Les objets assignés à l'invention visent également à proposer une vanne pourvue d'un dispositif de pilotage améliorant et fiabilisant la gestion de la pression, ainsi qu'un réseau, notamment d'adduction d'eau, présentant une capacité d'adaptation et une fiabilité accrues.

La présente invention vise enfin à proposer un nouveau procédé de pilotage automatique de la pression dans un réseau de distribution de fluide qui permette de réguler efficacement, et de façon particulièrement sûre la pression dans ledit réseau.

Les objets assignés à l'invention sont atteints à l'aide d'un dispositif de pilotage automatique pour vanne d'un réseau de distribution de fluide, caractérisé en ce qu'il comporte une double commande sécurisée comprenant :
- d'une part un premier pilote principal conçu pour commander la modification d'une section de passage variable de la vanne afin de réguler la pression aval de ladite vanne sensiblement suivant une première consigne de pression inférieure ou égale à une valeur nominale haute prédéterminée, la vanne étant pourvue d'un organe obturateur mobile dont la position détermine la section de passage, du genre clapet, et le dispositif de pilotage comportant des moyens d'actionnement liés fonctionnellement au pilote principal et aptes à entraîner ledit organe obturateur,
- et d'autre part un second pilote auxiliaire de sécurité conçu pour intervenir automatiquement si la pression aval atteint ou dépasse une valeur de sécurité supérieure à la valeur nominale haute, afin de commander la restriction de la section de passage de la vanne,
- et en ce que le pilote auxiliaire est interposé entre lesdits moyens d'actionnement et le pilote principal de sorte à pouvoir interrompre, lorsqu'il se déclenche, et au moins temporairement, la liaison fonctionnelle existant entre le pilote principal et lesdits moyens d'actionnement.

Les objets assignés à l'invention sont également atteints à l'aide d'une vanne destinée à être montée sur un réseau de distribution de fluide et pourvue d'un tel dispositif de pilotage, ainsi qu'à l'aide d'un réseau d'adduction d'eau comportant au moins une telle vanne.

Les objets assignés à l'invention sont enfin atteints à l'aide d'un procédé de pilotage automatique de la pression dans un réseau de distribution de fluide comportant une étape (a) de détection de pression régnant en aval d'une vanne, ledit procédé étant caractérisé en ce qu'il comporte une étape (b) de sélection automatique de mode de fonctionnement au cours de laquelle le réseau adopte alternativement et automatiquement soit un premier mode de fonctionnement régulé normal, tant que la pression aval P_{AV} relevée est inférieure ou. égale à une valeur nominale haute prédéterminée P_{MAX}. mode de fonctionnement dans lequel on fait intervenir un premier pilote pour réguler automatiquement la pression aval, par ajustement de la section de passage variable de la vanne, suivant une première consigne de pression P_{C1} inférieure ou égale à ladite valeur nominale haute, soit, si la pression aval P_{AV} dépasse une valeur de sécurité P_{S} supérieure à la valeur nominale haute P_{MAX}. un second mode de mise en sécurité dans lequel on fait intervenir un second pilote distinct du premier afin de forcer la restriction de la section de passage de la vanne.

### DESCRIPTIF SOMMAIRE DES DESSINS

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

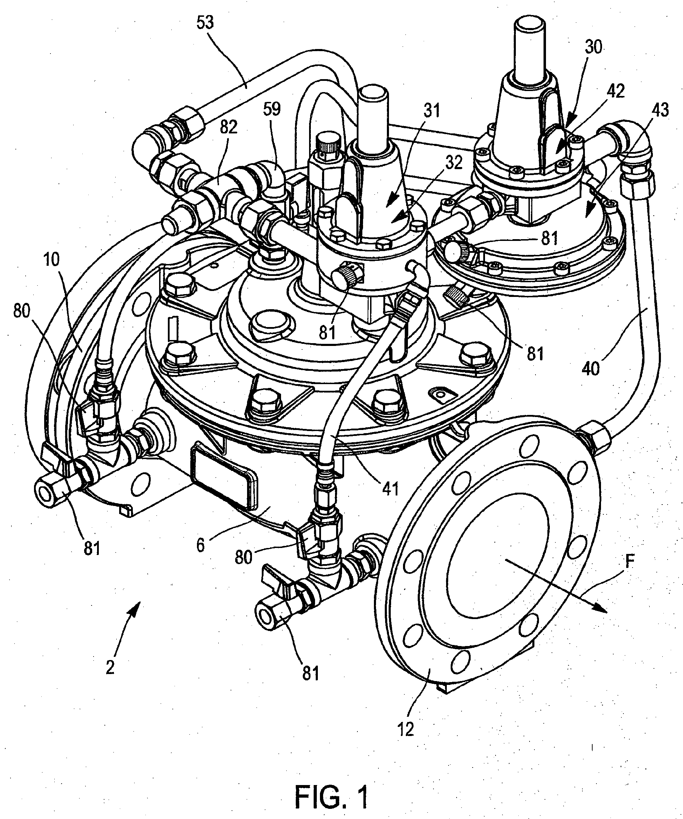

- La figure 1 illustre, selon une vue d'ensemble en perspective, une vanne équipée d'un dispositif de pilotage automatique embarqué conforme à l'invention.
- La figure 2 illustre, selon une vue schématique, la mise en oeuvre et le fonctionnement d'un dispositif de pilotage conforme à l'invention, selon une variante de réalisation qui correspond à celle de la figure 1.
- Les figures 3 et 4 illustrent, selon des vues de détail en coupe, respectivement un pilote auxiliaire et un pilote principal pouvant être mis en oeuvre au sein d'un dispositif de pilotage conforme à l'invention.

### MEILLEURE MANIERE DE REALISER L'INVENTION

La présente invention concerne un dispositif de pilotage 1 pour vanne 2 d'un réseau 3 de distribution de fluide, et plus particulièrement d'un réseau 3 d'adduction d'eau permettant l'alimentation en eau d'utilisateurs situés à distance de la vanne 2, en aval de cette dernière, par exemple au niveau de poteaux d'incendie 4 ou d'habitations 5.

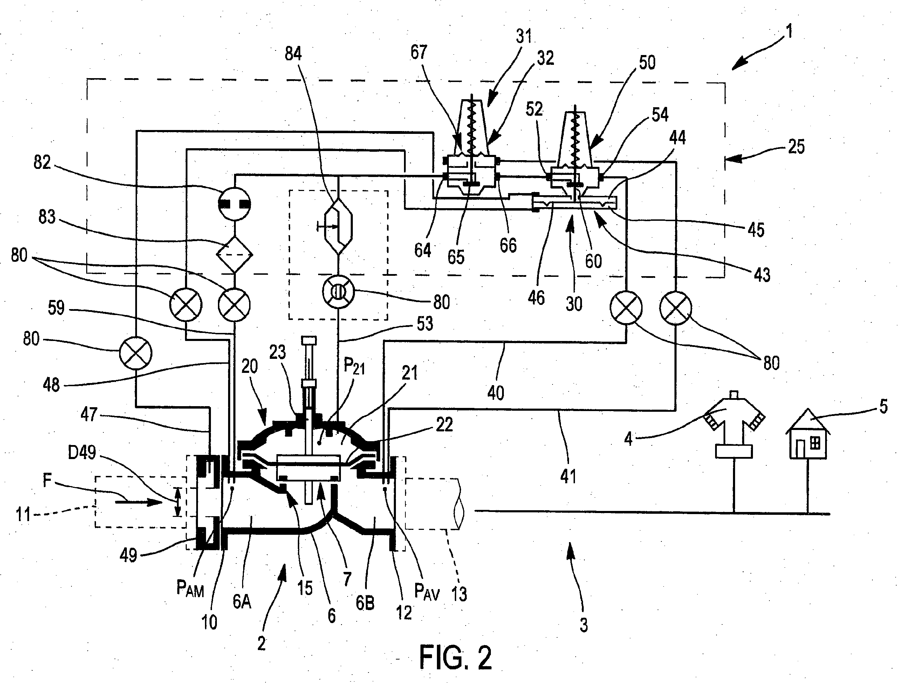

La vanne 2 conforme à l'invention présente, de manière connue et tel que cela est illustré sur la figure 2, un corps de vanne 6 qui renferme une section de passage variable 7 de part et d'autre de laquelle s'étende, dans le sens de l'écoulement F du fluide, une portion amont 6A présentant un organe de liaison amont 10, du genre bride, qui permet de raccordement de la vanne à un élément de conduite amont 11 qui assure son alimentation en fluide, et d'autre part une portion aval 6B pourvue d'un organe de raccordement aval 12, tel qu'une bride, permettant son raccordement à un élément de conduite aval 13 qui mène, directement ou indirectement, aux utilisateurs.

De préférence, la vanne 2 est pourvue d'un organe obturateur 14, du genre clapet (et assimilé à un clapet dans ce qui suit, par simple commodité de description), ledit organe obturateur étant monté mobile à l'encontre d'un siège 15, de préférence fixe, de telle sorte que la position relative dudit organe obturateur mobile 14 par rapport audit siège 15 détermine l'étendue de la section de passage 7.

De façon connue, le dispositif de pilotage 1 comporte alors des moyens d'actionnement 20, qui peuvent être rapportés extérieurement sur la vanne ou intégrés à cette dernière, et qui sont aptes à entraîner l'organe obturateur mobile 14, et plus particulièrement le clapet, en déplacement de sorte à manoeuvrer ladite vanne 2 en ouverture et en fermeture. ,

Lesdits moyens d'actionnement 20 peuvent prendre différentes formes, sans sortir du cadre de l'invention.

De préférence, ils comprendront une chambre d'actionnement 21, préférentiellement ménagée dans la partie supérieure du corps de vanne 6, ladite chambre d'actionnement 21 pouvant être délimitée, dans sa portion inférieure et en vis-à-vis du siège, par une membrane d'actionnement 22 élastique à laquelle est fixé, et par exemple suspendu, le clapet 14. En outre, le déplacement du clapet 14 sera de préférence guidé à translation vis-à-vis du siège par une tige de maintien coulissante 23.

Les moyens d'actionnement 20 peuvent également comprendre un ressort de rappel (non représenté), disposé par exemple dans la chambre 21 autour de la tige 23, et destiné à appliquer sur le clapet 14 une force de fermeture qui tend à le rappeler vers sa position d'obturation contre le siège 15.

De préférence, la chambre d'actionnement 21 peut donc être conçue pour déplacer le clapet 14, afin de modifier la section de passage 7, en fonction notamment du différentiel de pression qui s'exerce sur la membrane d'actionnement 22, d'un côté selon une résultante correspondant à la contribution de l'éventuel ressort de rappel et à celle de la pression d'actionnement P₂₁ qui règne dans ladite chambre 21 et qui est avantageusement pilotée par le dispositif de pilotage 1, et de l'autre côté selon la résultante correspondant à la contribution de la valeur de pression aval P_{AV} qui règne dans la portion, aval 6B du corps de vanne, à laquelle, s'ajoute éventuellement celle correspondant à la pression amont P_{AM} qui règne dans la portion amont 6A de la vanne et qui s'applique sensiblement sur la face opposée du clapet 14.

Selon une caractéristique importante de l'invention, le dispositif de pilotage 1 comporte une double commande sécurisée 25 qui comprend :
- d'une part un premier pilote principal 30 conçu pour commander la modification de la section de passage variable 7 de la vanne 2 afin de réguler la pression aval P_{AV} de ladite vanne 2 sensiblement suivant une première consigne de pression P_{C1} inférieure ou égale à une valeur nominale haute prédéterminée P_{MAX},
- et d'autre part, un second pilote auxiliaire 31 de sécurité conçu pour intervenir automatiquement si la pression aval P_{AV} atteint ou dépasse une valeur de sécurité P_{S} supérieure à la valeur nominale haute P_{MAX}. et ce afin de commander la restriction de la section de passage 7 de la vanne 2.

Avantageusement, une double commande 25 conforme à l'invention améliore considérablement la fiabilité et la sécurité de fonctionnement du dispositif de pilotage 1, et par conséquent de la vanne 2 qu'il équipe.

En effet, le pilote auxiliaire 31 remplit avantageusement le rôle d'un pilote de secours, correspondant en quelque sorte à un circuit de protection possédant une commande distincte et indépendante de la commande principale, cette demière étant réalisée quant à elle par le pilote principal 30.

De la sorte, si le pilote principal 30 est défaillant, pris en défaut, ou surpassé d'une quelconque autre manière dans son rôle de régulation, ce qui pourrait éventuellement se produire par exemple en cas de panne mécanique liée à un grippage, un voilage, ou une casse de pièce, une déchirure de membrane etc., alors le pilote auxiliaire 31, avantageusement distinct et indépendant du pilote principal 30, est capable de prendre le relais dudit pilote principal 30 défaillant et de se substituer à lui pour empêcher un accroissement incontrôlé de la pression aval P_{AV} qui serait sinon dommageable au réseau 3.

Plus particulièrement, le dispositif de pilotage 1 automatique conforme à l'invention est avantageusement conçu pour assurer une surveillance périodique voire permanente de la pression aval P_{AV} effective, de manière à pouvoir déclencher le pilote auxiliaire 31 s'il apparaît que cette pression aval dépasse la valeur de sécurité P_{S} prédéterminée.

De préférence, ladite valeur de sécurité P_{S} correspond à une valeur de pression admissible absolue (par rapport à la pression atmosphérique), choisie de telle sorte que le réseau puisse en principe être exposé, au moins temporairement sinon durablement, à ladite pression absolue sans subir de dommages irréversibles. Le cas échéant, on peut adapter cette valeur en fonction de normes ou de coefficients de sécurité applicables.

Avantageusement, le dispositif de pilotage 1 permet d'opérer, en cas de hausse anormale de la pression aval, une commutation automatique d'un premier mode de fonctionnement normal, basé sur la régulation par le pilote principal 30, à un second mode de mise en sécurité, qui permet notamment d'éviter l'emballement du réseau et l'apparition d'une pression aval absolue jugée excessive.

Cette commutation intervient avantageusement en cas d'apparition d'une surpression excédant la valeur maximale P_{MAX} en deçà de laquelle ledit pilote principal 30 est censé réguler le réseau lorsqu'il fonctionne normalement, le dépassement de cette valeur signalant par conséquent une défaillance de la régulation *a priori* causée par une défaillance ou une insuffisance dudit pilote principal 30.

De façon préférentielle, le pilote auxiliaire 31 n'intervient activement que lorsqu'il se déclenche, c'est-à-dire uniquement lorsque la pression aval dépasse la valeur nominale haute P_{MAX} pour atteindre voire dépasser la valeur de sécurité P_{S}.

En d'autres termes, le pilote auxiliaire 31 ne participe de préférence pas à la régulation en fonctionnement normal du dispositif, cette dernière étant assurée majoritairement sinon exclusivement par le pilote principal 30, de telle sorte que le pilote auxiliaire 31 est sollicité uniquement de manière exceptionnelle, en cas de dépassement de la pression de sécurité provoqué par exemple par la défaillance du pilote principal 30.

Du fait qu'il est peu, et en principe rarement sollicité, et dans la mesure où il est de surcroît préférentiellement dimensionné pour supporter des pressions plus élevées que celles normalement régulées par le pilote principal 30, tel que cela sera détaillé ci-après, le pilote auxiliaire 31 présente une longévité bien supérieure à celle du pilote principal 30, ce qui améliore sensiblement la fiabilité et la disponibilité fonctionnelle de l'ensemble.

Bien entendu, le pilote principal 30 et le pilote auxiliaire 31, peuvent faire l'objet de variantes d'agencement de sorte à pouvoir appliquer, selon le cas, différentes lois d'asservissement de la pression aval.

Dans un premier cas, le pilote principal 30 et/ou le pilote auxiliaire 31 pourront notamment être conçus pour appliquer une loi de régulation visant à maintenir sensiblement la pression aval à une valeur de consigne déterminée.

En particulier, le pilote auxiliaire 31 pourra comprendre un régulateur de pression 32, distinct du pilote principal 30, et apte à réguler la pression aval P_{AV} de la vanne 2 suivant une seconde consigne de pression P_{C2} déterminée. Ainsi, même après la commutation du premier mode de fonctionnement au second mode de fonctionnement, la pression aval P_{AV} continuera à être régulée automatiquement, par le pilote auxiliaire 31, de sorte à se maintenir sensiblement égale à ladite seconde consigne de pression P_{C2}.

Dans un second cas, le pilote principal 30 et/ou le pilote auxiliaire 31 pourront être conçus pour appliquer une loi de modulation, permettant de réguler la pression aval selon une valeur de consigne de pression (P_{C1} et/ou respectivement P_{C2}) qui est adaptée dynamiquement en fonction du débit de tirage qui circule à travers la vanne.

A ce titre, si le pilote principal 30 sera de préférence choisi systématiquement pour former un modulateur de pression, il est envisageable que le pilote auxiliaire 31 puisse quant à lui être soit conçu pour assurer une modulation de pression, la seconde consigne de pression P_{C2} étant (également) ajustée de manière dynamique, soit encore être conçu pour assurer une simple régulation de pression, à une consigne P_{C2} sensiblement fixe et invariante au cours du temps.

De façon particulièrement préférentielle, la (ou les) loi(s) de modulation sera(ont) établie(s) de sorte à augmenter la consigne de pression lorsque le débit de tirage, correspondant aux besoins instantanés cumulés des utilisateurs 4, 5, augmente, et inversement, de sorte à réduire la pression lorsque ledit débit de tirage diminue.

De façon particulièrement préférentielle, le dispositif de pilotage 1 et la vanne 2, ainsi que leurs différents éléments constitutifs, seront alors conçus et dimensionnés de sorte à ce que ladite ou lesdites loi(s) de modulation déterminent une évolution sensiblement linéaire et proportionnelle de la consigne, et donc de la valeur de pression aval P_{AV} régulée, en fonction de l'évolution du débit, typiquement entre deux bornes correspondant à des points de fonctionnement fixés par le client (utilisateur ou gestionnaire du réseau) et définis par des couples (Pression aval nominale ; Débit). Plus particulièrement, le premier point de fonctionnement correspondra à une pression nominale basse associée à débit minimal, et le second point à une pression nominale haute associée à un débit maximal.

Dans un troisième cas, le pilote auxiliaire 31 pourra être conçu pour appliquer une loi de condamnation forcée conduisant à la fermeture étanche et rapide, éventuellement définitive, de la vanne 2. Le cas échéant, le dispositif 1 pourra être pourvu de moyens de réarmement, manuels ou télé-pilotés, permettant à une personne chargée de la maintenance du réseau de lever cette condamnation en neutralisant le pilote auxiliaire afin de restaurer le premier mode de fonctionnement par le pilote principal 30 (le pilote auxiliaire 31 pouvant être alors assimilé, par analogie, à l'équivalent hydraulique d'un disjoncteur sur un circuit électrique).

Plus globalement, il est à ce titre remarquable qu'il n'est pas exclu que le dispositif de pilotage 1 comporte des moyens de commutation et d'isolement permettant de sélectionner alternativement et automatiquement, en particulier si la pression aval atteint ou franchit un seuil de déclenchement correspondant à la valeur de sécurité Ps susmentionnée, soit le premier pilote principal 30, soit le pilote auxiliaire 31 de telle sorte qu'il soit possible de commuter alternativement entre au moins deux modes de fonctionnement distincts de la vanne 2, le premier mode correspondant à une régulation ou une modulation par le premier pilote 30 suivant une première loi d'asservissement définissant une première consigne de pression P_{C1}, et le second correspondant à une régulation ou une modulation par le second pilote 31. suivant une seconde loi d'asservissement définissant une seconde consigne de pression P_{C2} qui peut être égale ou différente, et notamment soit supérieure, soit éventuellement inférieure, à la première consigne de pression P_{C1}.

Avantageusement, la séparation des commandes, et plus particulièrement la séparation du premier et du second pilote 30, 31 entre eux d'une part et par rapport à la vanne 2 d'autre part, offre une indépendance et une grande liberté dans les réglages, notamment quant à la définition des différents seuils et consignes de pression ainsi que des lois d'asservissement, et procure également un accès physique facile et intuitif, tant aux moyens de réglage de ces paramètres qu'aux différents composants du dispositif 1, ce qui simplifie considérablement les opérations d'installation et de maintenance.

De façon particulièrement préférentielle, la seconde consigne de pression P_{C2} sera choisie, et éventuellement fixée, à une valeur supérieure à la valeur nominale haute P_{MAX}, et de préférence sensiblement égale à la valeur de sécurité P_{S}.

Ainsi, on pourra avantageusement, en cas de nécessité, et notamment de défaillance du premier pilote 30, substituer à un premier mode de fonctionnement normal de *«premier niveau* », correspondant à une régulation ou une modulation de pression autour d'une première consigne P_{C1} basse ou modérée, inférieure à ladite valeur nominale haute P_{MAX}, un second mode de régulation voire de modulation à un « *second niveau »* supérieur, par le pilote auxiliaire 31, lequel pourra éventuellement correspondre à un mode « *dégradé »* mais stabilisé, et fonctionnel, empêchant l'apparition ou l'aggravation de fuites ou de dégâts sur le réseau aval.

Les valeurs de consigne P_{C1}, P_{C2}, la valeur nominale haute P_{MAX} et la valeur de sécurité P_{S} seront-elles-mêmes strictement inférieures à la pression amont P_{AM} disponible ou attendue dans le réseau en amont de la vanne 2.

A titre d'exemple non limitatif, la première consigne P_{C1} pourra être comprise sensiblement entre 20 % et 80 % de la pression amont, et par exemple dans l'absolu entre 3 bar et 9 bar, de préférence sensiblement entre 4 bar et 7 bar, et présenter un différentiel par rapport à la pression amont n'excédant pas 10 bar, notamment pour éviter les phénomènes de cavitation. La pression de sécurité Ps pourra notamment être choisie supérieure de sensiblement 0,5 bar à 1 bar par rapport à ladite première consigne et/ou par rapport à la valeur nominale haute.

Si la pression aval doit être particulièrement basse, et notamment être inférieure ou égale à 1,5 bar ou 2 bar, ou encore si le différentiel entre la pression amont P_{AM} disponible et la pression aval P_{AV} régulée doit dépasser un certain seuil, il sera possible d'adapter la vanne en conséquence tout en conservant le bénéfice du double pilotage, par exemple en utilisant des matériaux plus résistants et/ou en prévoyant des moyens anti-cavitation, par ailleurs connus en tant que tels, au niveau du siège, du clapet, et du porte-clapet.

Le dispositif de pilotage 1 conforme à l'invention est donc susceptible d'être adapté à des plages de fonctionnement très diverses et au besoin particulièrement étendues.

En tout état de cause, quelles que soient les lois d'asservissement retenues, le dispositif de pilotage 1 sera de préférence conçu de sorte à pouvoir conduire à la fermeture étanche de la vanne 2, c'est à dire plus particulièrement la réduction à zéro de la section variable 7, sous la commande du pilote principal 30 si la pression aval P_{AV} franchit et dépasse la première pression de consigne P_{C1}, et/ou, respectivement, de sorte à provoquer la fermeture ëtanche de la vanne sous la commande du pilote auxiliaire 31 si la pression aval P_{AV} franchit et dépasse la pression de sécurité P_{S}.

En d'autres termes, le pilote principal 30 et le pilote auxiliaire 31 seront de préférence réglés de sorte à pouvoir provoquer, lorsqu'ils sont opérationnels et lorsque cela s'avère nécessaire, un déplacement du clapet 14 d'amplitude suffisante pour obtenir la fermeture complète de la vanne.

A ce titre, il est remarquable que la régulation dynamique de la pression par l'un ou l'autre des pilotes 30, 31 peut intervenir essentiellement par de simples ajustements de la position du clapet 14 sur une course réduite, entre différentes positions d'ouverture dudit clapet, la fermeture complète du pilote 30, 31 en cas de dépassement de la consigne déclenchant le départ d'un mouvement de fermeture du clapet qui peut toutefois être interrompu, avant que ledit clapet ne rencontre le siège 15, si la baisse de pression résultant du déplacement de fermeture ainsi amorcé est suffisante pour faire passer de nouveau la pression aval sous la consigne de régulation du pilote, et ainsi provoquer la réouverture dudit pilote et l'arrêt, sinon le rebroussement, du déplacement du clapet 14.

Toutefois, les pilotes 30, 31, et le dispositif de pilotage seront avantageusement capables d'amener au besoin la vanne 2 à se fermer totalement, notamment lorsque la pression aval qu'ils détectent franchit et dépasse durablement, par exemple, selon les dimensions de la vanne, plus de quelques secondes à plus d'une dizaine ou d'une vingtaine de secondes, leur valeur de consigne respective.

Le cas échéant, le temps de réponse en fermeture du pilote principal 30 et celui du pilote auxiliaire 31 pourront avantageusement être choisis selon le mode de fonctionnement que l'on souhaitera privilégier.

Ainsi, si l'on souhaite privilégier le second mode de sécurité, afin que, en cas de surpression notable, et plus particulièrement d'apparition d'une pression aval supérieure ou égale à la pression de sécurité P_{S}, et même si ledit état de surpression est temporaire, le pilote auxiliaire soit prépondérant et réagisse plus vite que le pilote principal afin de préserver immédiatement le réseau et/ou ledit pilote principal 30, alors on pourra dimensionner ou régler le pilote auxiliaire de telle sorte que son temps de réponse en fermeture soit inférieur à celui du pilote principal, par exemple en adaptant les surfaces actives respectives des pilotes qui sont sensibles à la pression aval (ou à l'image de celle-ci) ou encore en utilisant par exemple un frein mécanique, un amortisseur pneumatique ou hydraulique, ou tout autre dispositif retardateur, agissant sur la tige de l'équipage mobile d'obturation de l'autre pilote afin d'en freiner ou d'en retarder le déplacement.

A l'inverse, si l'on souhaite privilégier le premier mode de fonctionnement normal, c'est-à-dire une régulation par le pilote principal 30, de manière à ne pas déclencher inutilement le pilote auxiliaire 31 à chaque éventuel pic transitoire de pression qui dépasserait très temporairement la pression de sécurité, alors on pourrait envisager de choisir un temps de réponse du pilote auxiliaire supérieur à celui du pilote principal, de telle sorte que ledit pilote auxiliaire ne se déclenchera véritablement qu'en cas de surpression durable considérée comme inacceptable, voire dangereuse, pour le pilote principal 30 et pour le réseau.

Selon une variante de réalisation préférentielle, tel que cela est illustré sur la figure 2, le dispositif de pilotage 1 comporte des moyens d'actionnement 20 communs, qui sont aptes à entraîner le clapet 14 en déplacement sous la commande soit du pilote principal 30, soit du pilote auxiliaire 31.

En d'autres termes, le dispositif de pilotage 1, et plus globalement la vanne 2, possèdent de préférence deux commandes séparées (deux pilotes 30, 31) pour déclencher et asservir le mouvement relatif et la position du clapet 14 par rapport au siège 15, mais présentent en revanche une communauté de moyens d'actionnement 20, communs aux deux pilotes 30, 31 et réagissant aux signaux de commande émis par l'un ou par l'autre desdits pilotes.

Avantageusement, on peut ainsi préserver la fiabilité de la double commande 25 tout en conservant une structure de dispositif de pilotage 1, et plus globalement de vanne 2, particulièrement compacte. En effet, ledit dispositif 1 possédant alors un unique sous-ensemble de moyens d'actionnement 20 non redondants, et en particulier une même et unique chambre d'actionnement 21 pouvant communiquer avec chacun des pilotes, ledit sous-ensemble unique étant de préférence intégré dans le corps de la vanne 6 elle-même, l'ensemble se voit particulièrement simplifié, allégé, et son encombrement réduit.

A ce titre, il est remarquable que, lorsque les moyens d'actionnement 20 reposent sur un mécanisme fiable et éprouvé d'obturation directe intégré au corps de vanne, lequel présente en lui-même une grande robustesse et une excellente fiabilité, il n'est pas absolument nécessaire de dédoubler lesdits moyens d'actionnement, leur probabilité de défaillance étant *a priori* nettement inférieure à celle des pilotes 30, 31, quant à eux redondants.

Par ailleurs, il est remarquable que de telles dispositions permettent de simplifier l'agencement de la vanne et accordent une certaine liberté dans le placement individuel des pilotes 30, 31, qui peuvent avantageusement être séparés et disposés à distance l'un de l'autre, mais également être séparés et disposés à distance de la région physiquement occupée par les moyens d'actionnement 20, auxquels ils peuvent être reliés par un réseau de tubulures idoines.

Bien entendu on pourrait également prévoir, sans sortir du cadre de l'invention, de doubler également les moyens d'actionnement en utilisant deux groupes de moyens d'actionnement capables d'agir sur le clapet de manière indépendante, chacun sous la dépendance d'un unique pilote 30, 31.

Par ailleurs, que les moyens d'actionnement 20 soient doublés ou communs, le pilote auxiliaire 31 sera de préférence interposé entre lesdits moyens d'actionnement 20 et le pilote principal 30, auquel lesdits moyens d'actionnement 20 sont par ailleurs liés fonctionnellement au moins dans le premier mode de fonctionnement, de sorte à pouvoir interrompre, lorsque ledit pilote auxiliaire se déclenche, et au moins temporairement, la liaison fonctionnelle existant entre le pilote principal 30 et lesdits moyens d'actionnement 20.

En d'autres termes, le pilote auxiliaire 31 se comporte de préférence comme un coupe-circuit capable de déconnecter au moins temporairement, sinon définitivement, le pilote principal 30 des moyens d'actionnement 20, afin d'interrompre ou de neutraliser le signal de commande issu dudit pilote principal.

Ainsi, lorsqu'il est satisfait aux conditions de déclenchement du pilote auxiliaire 31, et plus particulièrement lorsque la pression aval P_{AV} dépasse la valeur de sécurité P_{S}, la commande auxiliaire devient prépondérante sur la commande principale et se substitue à cette dernière pour provoquer, par l'intermédiaire des moyens d'actionnement 20, la manoeuvre physique du clapet.

On peut donc avantageusement donner la priorité au mode de fonctionnement de sécurité géré par le pilote auxiliaire 31 afin d'éviter tout conflit entre la régulation principale et la régulation auxiliaire, ou à tout le moins de manière à empêcher que la régulation éventuellement défaillante procurée par le pilote principal 30 ne perturbe celle procurée par le pilote auxiliaire 31.

Le cas échéant, cette substitution pourra éventuellement être temporaire dans le cas où le pilote principal 30, par ailleurs toujours en état de fonctionnement, n'a été que temporairement débordé par rapport à ses capacités de régulation, et ainsi temporairement mis « *hors-circuit »* par le pilote auxiliaire 31.

Ainsi, on privilégiera de préférence un pilotage automatique à sécurité passive, le pilote auxiliaire étant, si les conditions de fonctionnement, et notamment de surpression, sont réunies, prioritaire sur le pilote principal.

De façon préférentielle, et indépendamment de leur régime de fonctionnement ou de commutation au sein du dispositif de pilotage 1 conforme à l'invention, le pilote principal 30 et/ou le pilote auxiliaire 31, de même que, de préférence, les moyens d'actionnement 20, sont conçus pour être alimentés en énergie uniquement par le fluide présent dans le réseau 3 auquel doit se raccorder la vanne 2 qu'ils équipent.

Avantageusement, une telle disposition permet au dispositif de pilotage 1 de jouir d'une totale autonomie, tant pour exercer le pilotage et générer les commandes correspondantes que pour exécuter lesdites commandes en actionnant le clapet de la vanne.

Outre l'optimisation de l'autonomie, laquelle est en pratique quasiment illimitée tant que le réseau est alimenté par un fluide sous pression, une telle disposition permet d'améliorer la fiabilité du dispositif de pilotage, en évitant toute interruption accidentelle de l'alimentation en énergie nécessaire notamment à la commutation ou au pilotage en mode de sécurité.

Une telle solution et permet de surcroît de limiter l'encombrement du dispositif 1 et de la vanne 2 puisqu'elle ne nécessite ni circuit de distribution supplémentaire d'énergie, ni batterie, ni câbles, etc.

A ce titre, s'il est envisageable que l'énergie nécessaire au dispositif 1 soit tirée indirectement de l'énergie du fluide, par exemple au moyen d'un dispositif de conversion mécanique ou électromécanique de type turbine, éventuellement couplée à un générateur, le pilote principal 30, et/ou le pilote auxiliaire 31, et/ou les moyens d'actionnement 20 seront de préférence de type mécanique, hydraulique et/ou pneumatique, de sorte à pouvoir tirer leur énergie motrice directement de l'état de pression et/ou de débit du fluide, tel qu'il existe dans la vanne ou aux abords immédiats de cette dernière.

Par ailleurs, bien qu'il soit envisageable que le dispositif de pilotage 1 présente des moyens de détection communs pour fournir aux moyens de commutation une image de la valeur de pression aval P_{AV} permettant auxdits moyens de commutation de commuter du pilote principal 30 au pilote auxiliaire 31, voire inversement, ledit pilote principal 30 et ledit pilote auxiliaire 31 possèdent toutefois de préférence chacun leur propre circuit de prise de pression 40, 41, de sorte à pouvoir détecter séparément, chacun pour son compte, la pression aval P_{AV}.

Avantageusement, en d'autres termes, le circuit de commande est de préférence entièrement redondant, et en l'espèce doublé, depuis la mesure de la pression jusqu'à la génération d'un signal de commande approprié à destination des moyens d'actionnement 20.

En séparant le premier circuit de prise de pression 40, renseignant et conditionnant le fonctionnement du premier pilote 30, du second circuit de prise de pression 41, renseignant et conditionnant le déclenchement du second pilote 31, on limite considérablement les risques de défaillance (par exemple par obstruction ou rupture) simultanée desdits circuits, et par conséquent la probabilité de panne simultanée des pilotes 30, 31 par *« aveuglement »* ou saturation.

La fiabilité du dispositif et de la vanne s'en trouve ainsi accrue, le dispositif dans son ensemble conservant en principe en permanence au moins une chaîne de commande intègre et opérationnelle.

De façon particulièrement préférentielle, le pilote principal 30 forme un modulateur de pression 42, régi par une loi d'asservissement de type modulation, et comporte à cet effet un compensateur automatique 43 qui permet de modifier dynamiquement la première consigne de pression P_{C1} en fonction du débit de fluide F qui traverse la vanne 2.

En d'autres termes, la première consigne de pression P_{C1} pourra avantageusement évoluer entre une valeur nominale basse P_{MIN} et une valeur nominale haute P_{MAX} prédéterminée par construction, ladite première consigne de pression P_{C1} augmentant avec l'accroissement du débit de tirage et diminuant avec la réduction dudit débit.

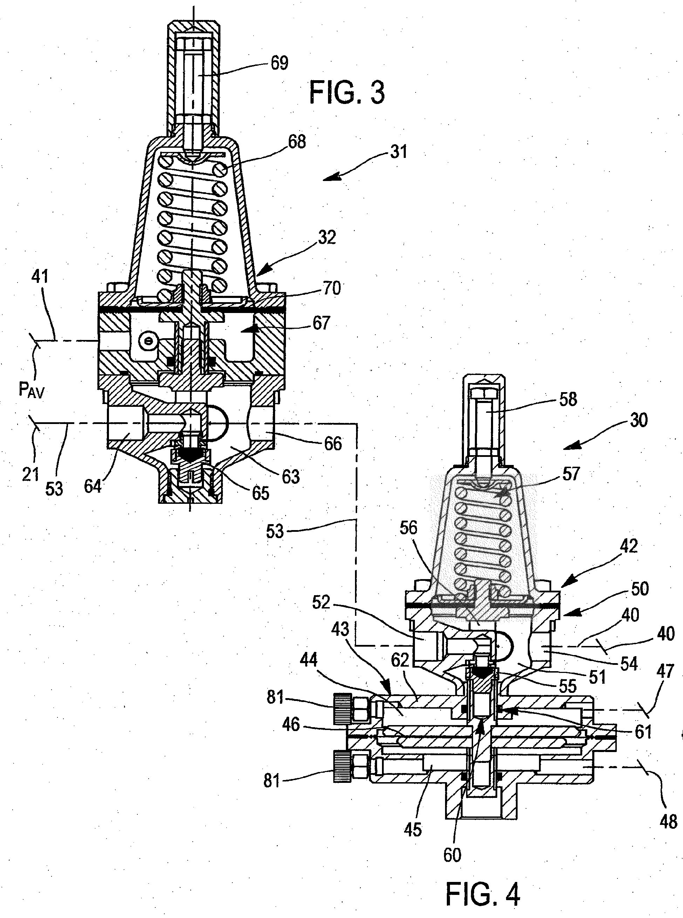

Tel que cela est illustré sur la figure 4, le compensateur 43 pourra présenter une première chambre de compensation 44 et une seconde chambre de compensation 45 séparées l'une de l'autre par un organe de compensation mobile 46 étanche, du genre membrane de compensation.

Lesdites première et seconde chambres de compensation 44, 45 peuvent être avantageusement reliées respectivement à une première prise de pression de compensation 47 et à une seconde prise de pression de compensation 48 de telle sorte que la pression différentielle correspondante qui s'exerce sur la membrane de compensation 46 permet de déplacer ladite membrane afin de modifier la première consigne de pression.

De façon particulièrement préférentielle, selon une caractéristique qui peut constituer une invention à part entière, la première prise de pression de compensation 47 et la seconde prise de pression de compensation 48 seront disposées de part et d'autre d'un diaphragme 49 qui est disposé dans le canal d'écoulement emprunté par le fluide, et de préférence logé dans la portion amont de la vanne 6A, et par exemple fixé à la bride amont 10.

Avantageusement, l'utilisation d'un diaphragme 49 cause, lorsque le fluide s'écoule, une perte de charge reflétant le débit instantané dans la vanne.

De préférence, le diaphragme 49 est disposé dans la portion amont de la vanne dans laquelle l'écoulement est relativement stabilisé, de sorte à procurer une mesure fiable.

Avantageusement, le diamètre intérieur de passage du diaphragme D₄₉, de même que les chambres de compensation, seront dimensionnés pour procurer une loi de modulation évoluant selon une courbe (pression/débit) souhaitée, de préférence sensiblement linéaire.

Bien entendu, il est tout à fait envisageable que le compensateur 43. réagisse à un autre type de mesure ou d'évaluation directe ou indirecte du débit, par exemple en étant pourvu d'un débitmètre lui procurant cette information, ou encore d'un dispositif quelconque permettant de relever la position du clapet de la vanne par rapport à son siège, ou encore d'un mécanisme de commande hydraulique ou mécanique animé par le déplacement de la tige de guidage 23 dudit clapet.

Par ailleurs, le pilote principal 30 comporte de préférence un étage de pilotage 50 comprenant, de manière connue, une chambre d'écoulement 51 qui est pourvue d'une part d'un orifice d'admission 52, raccordé à la chambre d'actionnement 21 par une tubulure de transmission de commande 53, et d'autre part d'un orifice d'évacuation 54 destiné à être raccordé à la portion aval 6B de la vanne 2, de préférence par la première conduite de prise de pression aval 40.

Ledit étage de pilotage 50 comprend également un obturateur 55 porté par un équipage mobile 56, lequel est précontraint par un organe de tarage 57, tel qu'un ressort, reposant sur une embase soutenue par une vis de tarage 58, et qui contribue à définir une première consigne de pression P_{C1.}

De façon connue, ledit obturateur 55 coopère avec l'orifice d'admission 52 de manière à pouvoir alternativement mettre en communication la chambre d'actionnement 21 de la vanne avec la portion aval 6B de ladite vanne 2, par l'intermédiaire de la chambre d'écoulement 51, et ce afin de provoquer la purge de ladite chambre d'actionnement 21 et par conséquent l'ouverture remontante du clapet 14, lorsque la pression aval P_{AV} est inférieure à la première consigne de pression P_{C1}, ou au contraire, pour insoler la chambre d'actionnement 21 de la chambre d'écoulement 51 et de la portion aval 6B de la vanne, de sorte à autoriser le remplissage à partir d'un conduit de remplissage amont 59, et ainsi provoquer la fermeture descendante du clapet 14 lorsque la pression aval P_{AV} atteint ou dépasse la première consigne de pression P_{C1}.

On retrouve ici un fonctionnement de pilotage classique permettant d'alterner le remplissage et la ponction d'une chambre d'actionnement 21 surplombant le siège de la vanne.

De façon particulièrement avantageuse, et selon une caractéristique qui peut constituer une invention à part entière, indépendamment des lois régissant le fonctionnement du dispositif ou même de la présence d'un pilote auxiliaire 31 conforme à l'invention, l'équipage mobile 56 de l'étage de pilotage 50 est solidarisé à l'organe mobile de compensation 46, de préférence au moyen d'une tringle 60 rigide qui coulisse de manière étanche à travers un palier 61 lui-même percé dans une cloison 62 qui sépare la chambre d'écoulement 51 des chambres de compensation 44, 45, et notamment de la chambre de compensation supérieure 44.

Avantageusement, la tringle 60 permet de transmettre solidairement et directement à l'équipage mobile 56 le déplacement de la membrane de compensation 46 ainsi que l'effort de traction ou de compression verticale qui s'exerce sur elle, c'est à dire de moduler précisément la première consigne de pression P_{C1} en ajoutant fidèlement la contribution du compensateur 43 à celle du ressort de tarage 57.

De préférence, le pilote auxiliaire 31 pourra être formé par un régulateur de pression 32, tel que cela est iliustré sur la figure 3, ledit régulateur de pression 32 comprenant une chambre de circulation 63 qui comporte une entrée 64, laquelle coopère avec un obturateur de régulation 65 porté par un équipage mobile auxiliaire et est raccordée à la chambre d'actionnement 21, ainsi qu'une sortie 66 qui est de préférence reliée à l'orifice d'admission 52 de l'étage de pilotage 50 du pilote principal 30.

Avantageusement, le pilote auxiliaire 31, et plus particulièrement la chambre de circulation 63 du régulateur de pression 32, se trouvent ainsi interposés, sur la tubulure de transmission de commande 53, entre la chambre d'actionnement 21 et le pilote principal 30, ce dernier se trouvant donc monté en série, et plus particulièrement alimenté en aval du pilote auxiliaire 31 sur le circuit de commande, et de purge, de la chambre d'actionnement 21.

Ainsi, l'état d'ouverture ou de fermeture du pilote auxiliaire 31 décide de la communication ou de la séparation du pilote principal 30 par rapport aux moyens d'actionnement 20.

Avantageusement, le régulateur de pression 32 comprend un étage de commande 67, lequel est avantageusement taré sensiblement à la seconde valeur de consigne P_{C2}, et plus particulièrement à la valeur de sécurité P_{S}, et relié à la portion aval 6B de la vanne 2 par la seconde conduite de prise de pression aval 41.

Ici encore, le tarage peut utiliser un ressort 68 dont la position et la contrainte sont réglables par une vis 69 idoine, et agissant à l'encontre de la pression aval sur une membrane de séparation 70 afin de contrôler le déplacement, ici sensiblement en translation verticale sur la figure 3, de l'équipage mobile auxiliaire et donc de l'obturateur de régulation 65.

II est remarquable que l'utilisation d'un régulateur simple permet de recourir à une technologie peu complexe, robuste et éprouvée, dont la probabilité de défaillance est inférieure à celle du pilote principal 30, et ce d'autant plus que ledit régulateur est en principe nettement moins fréquemment sollicité que ne l'est le pilote principal.

Par ailleurs, l'ensemble des tubulures et éléments mis en oeuvre pourront comporter, au besoin, des vannes d'isolement 80, ainsi que des bouchons de vidange 81.

En outre, tel que cela est illustré sur la figure 2, le conduit de remplissage amont 59, qui relie la portion amont 6A de la vanne d'abord au pilote auxiliaire 31 puis au pilote principal 30, comporte de préférence un organe de restriction, tel qu'un diaphragme 82, destiné à occasionner une perte de charge par étranglement entre la portion amont 6A et la jonction dudit conduit de remplissage amont 59 avec tubulures de transmission de commande 53, et ce afin de privilégier la purge de la chambre d'actionnement 21 sur le remplissage de celle-ci lorsque les pilotes 30, 31 sont tous deux ouverts pour mettre ladite chambre 21 en communication avec la portion aval 6B de la vanne.

En outre, le conduit de remplissage 59 pourra également comporter un filtre 83 destiné à empêcher l'encrassement, voire l'occlusion des pilotes 30, 31 et du diaphragme 82.

Par ailleurs, la portion de la tubulure de transmission de commande 53 qui permet alternativement le remplissage ou la purge de la chambre d'actionnement 21 peut également être pourvue, tel que c'est illustré sur la figure 2, d'un ralentisseur fermeture/ouverture 84 permettant de définir un étranglement de section prédéfinie afin d'ajuster les conditions, et notamment la vitesse, de remplissage et de purge de ladite chambre 21.

Enfin, il est remarquable que, selon une caractéristique préférentielle qui peut constituer une invention à part entière, on peut prévoir que le dispositif 1, et plus particulièrement la vanne 2 ou l'un et/ou l'autre des pilotes 30, 31, comporte des moyens de signalisation (non représentés) permettant d'indiquer à un utilisateur que la commutation du pilote principal vers le pilote de sécurité a eu lieu, afin d'alerter le gestionnaire du réseau sur la nécessité de procéder, à plus ou moins court terme, à une opération de maintenance.

Le cas échéant, les moyens de signalisation pourront équiper, de manière générale, un pilote 30, 31 quelconque, et plus particulièrement le pilote auxiliaire 31 dans le cas présent, afin de signaler que son déclenchement s'est produit (au moins une fois) et/ou d'indiquer si ledit pilote est activement sollicité à un instant donné.

De tels moyens de signalisation pourront être visuels et comporter, par exemple, un indicateur coloré apparaissant derrière une fenêtre au niveau de la vanne, et notamment du pilote auxiliaire, lorsque la commutation se produit.

A cet effet, l'indicateur pourra par exemple être formé par un témoin mobile portant une portion colorée, du genre tige coulissante; ruban glissant ou disque basculant à secteur angulaire coloré, et dont le mouvement de déplacement vers la fenêtre, de préférence irréversible, est provoqué par le premier mouvement de fermeture du pilote auxiliaire.

Le cas échéant, la propulsion du témoin pourra être assurée activement par le déplacement de l'équipage mobile du pilote auxiliaire, ou passivement, par exemple par un ressort de rappel précontraint au montage, le déplacement de l'équipage mobile du pilote auxiliaire agissant alors comme simple déclencheur libérant irréversiblement, par exemple au moyen d'une gâchette, le mouvement de rappel du témoin vers la fenêtre.

Les moyens de signalisation pourront également, selon une autre variante de réalisation, comporter un capteur électrique ou électronique éventuellement relayé par un système de transmission d'alerte à distance.

Bien entendu, l'invention concerne également en tant que telle une vanne 2 portant tout ou partie d'un dispositif de pilotage 1 décrit précédemment et destinée à être montée sur un réseau de distribution 3 de fluide.

Avantageusement, le dispositif de pilotage 1 sera embarqué, voire intégré au corps de la vanne 2, entre les brides amont 10 et aval 12, de sorte à former un sous-ensemble aisément transportable et remplaçable.

Avantageusement, on peut ainsi envisager d'échanger une vanne défaillante ou de remplacer des vannes à modulation classique par des vannes conformes à l'invention qui sont déjà entièrement pré-équipées de leur dispositif de pilotage 1.

En outre, la vanne considérée est avantageusement contrôlée par des pilotes locaux, qui lui sont attachés, de telle sorte qu'elle peut adapter elle-même, automatiquement et localement, son comportement en cas de défaillance, sans nécessiter d'intervention extérieure, distante ou impliquant la modification d'autres points du réseau (par exemple par isolement et mise en place d'une dérivation complexe).

Par ailleurs, l'invention concerne également en tant que tel un réseau, et plus particulièrement un réseau d'adduction d'eau comportant au moins une vanne 2, et de préférence une pluralité de vannes, disposées de préférence en cascade d'amont en aval et/ou aux différents noeuds du réseau, et équipées chacune d'un dispositif de pilotage conforme à l'invention.

Avantageusement, un tel réseau pourra donc présenter une pluralité de secteurs ou de maille modulés et sécurisés par lesdites vannes.

Le fonctionnement d'une variante de réalisation préférentielle du dispositif va maintenant être décrit en détail, en référence aux figures ainsi qu'à un procédé de pilotage automatique de la pression dans un réseau de distribution de fluide conforme à l'invention.

Selon l'invention, le procédé comporte une étape (a) de détection de la pression régnant en aval d'une vanne, ladite étape étant avantageusement réalisée par des moyens de détection utilisant les circuits de prise de pression aval P_{AV} 40, 41 décrits plus haut.

Le procédé comporte également une étape (b) de sélection automatique de mode de fonctionnement, au cours de laquelle le réseau 3 adopte alternativement et automatiquement soit un premier mode de fonctionnement régulé normal, tant que la pression aval P_{AV} relevée est inférieure ou égale à une valeur nominale haute prédéterminée P_{MAX}. mode dans lequel on fait intervenir un premier pilote 30 pour réguler automatiquement la pression aval P_{AV} par ajustement de la section de passage variable 7 de la vanne 2, et ce suivant une première consigne de pression P_{C1} inférieure ou égale à la valeur nominale haute P_{MAX}, soit, si la pression aval P_{AV} dépasse une valeur de sécurité P_{S} supérieure à la valeur nominale haute P_{MAX}, un second mode de mise en sécurité dans lequel on fait intervenir un second pilote 31 distinct du premier pilote 30 afin de forcer la restriction de la section de passage 7 de la vanne 2.

En d'autres termes, le procédé permet de recueillir et d'analyser la valeur de pression aval P_{AV}, de la comparer à une valeur de référence, qui peut en l'espèce être la valeur de sécurité P_{S} puis, selon le résultat de cette comparaison, de basculer le fonctionnement du dispositif soit dans un premier mode de régulation normale selon une première loi, et plus particulièrement de modulation autour d'une première consigne P_{C1,} géré par le pilote principal 30, soit au contraire, si la pression aval est supérieure à ce seuil, à basculer dans un second mode de régulation géré par le second pilote auxiliaire 31, selon une seconde loi, de préférence de régulation selon la seconde consigne P_{C2}.

Ainsi, ledit procédé permet de choisir automatiquement le circuit de pilotage le plus approprié en fonction des conditions de pression existantes au niveau de la vanne d'une part, et des conditions de pression souhaitées d'autre part, et plus particulièrement en fonction du niveau de pression aval.

Bien entendu, il est possible de fixer librement la marge de tolérance entre d'une part la première plage de fonctionnement du premier pilote 31, laquelle est, en cas de modulation, comprise entre la valeur nominale basse P_{MIN} et la valeur nominale haute P_{MAX}, et la valeur de référence, extérieure à cette première plage de fonctionnement, correspondant au seuil auquel s'opère la commutation entre le premier pilote 30 et second pilote 31, la différence entre ladite valeur de référence et la borne la plus proche de ladite première plage définissant l'amplitude de la marge de tolérance dans laquelle le premier pilote « *conserve la main »* bien que la pression aval se trouve, généralement temporairement, au-delà des limites dans lesquelles ledit premier pilote est censé la maintenir.

En d'autres termes, on peut choisir assez librement la marge de tolérance pendant laquelle le pilote principal 30 peut conserver la gestion de la vanne, bien que sa capacité soit ponctuellement et légèrement dépassée.

A l'inverse, on peut fixer la valeur de référence de la commutation, et plus particulièrement la pression de sécurité, très proche de la valeur nominale haute P_{MAX.}

Le second pilote 31 peut être conçu pour réguler la pression dans une seconde plage de fonctionnement, qui peut avantageusement contenir la première (notamment dans le cas où la nouvelle régulation s'opère autour de la pression de sécurité), voire au contraire être strictement contenue dans ladite première plage, la régulation du second mode de fonctionnement, après commutation, étant plus stricte que celle, avant commutation, du premier mode (c'est-à-dire notamment bornée par une seconde consigne nominale maximale strictement inférieure à la consigne nominale haute P_{MAX} prévalant dans le premier mode), afin, par exemple, de préserver un réseau qui aurait été fragilisé.

Considérons maintenant que le pilotage est assuré par le premier pilote principal 30, la pression aval P_{AV} étant inférieure ou égale à la pression de sécurité P_{S}.

La vanne 2 est initialement fermée. Lorsqu'un tirage de fluide est effectué par l'un des utilisateurs 4, 5, celui-ci crée un appel au niveau de la portion aval de la vanne 6B dont la pression P_{AV} diminue. Cette baisse de pression se répercute dans la chambre d'écoulement 51 du pilote principal 30, de telle sorte que l'équipage mobile 56, repoussé par le ressort 57, descend en séparant l'obturateur 55 de l'orifice d'admission 52.

Le pilote auxiliaire se trouve quant à lui en position ouverte, puisque la pression dans l'étage de commande 67, perçue à travers le circuit de prise de pression 41, est inférieure à la pression de consigne correspondant à la pression de sécurité, et est donc insuffisante pour refermer l'obturateur 65 à l'encontre du ressort 68.

Le fluide contenu dans la chambre d'actionnement 21 s'écoule donc progressivement à travers le circuit de purge comprenant la tubulure de transmission de commande 53, la chambre de circulation 63 du pilote auxiliaire 31, puis la chambre d'écoulement 51 du pilote principal, l'orifice d'évacuation 54 et enfin la conduite de prise de pression 40, pour s'échapper dans la portion aval 6B.

La pression amont qui s'exerce sur le clapet 14, conjuguée à l'effet élastique éventuel de la membrane d'actionnement 22, tire le clapet 14 en retrait de son siège en faisant remonter simultanément la tige 23, de telle sorte que la vanne principale s'ouvre en suivant le mouvement d'ouverture de son pilote.

L'apparition d'un écoulement F provoque, selon le débit dudit écoulement, une différence de pression plus ou moins importante de part et d'autre du diaphragme 49, laquelle se retrouve sensiblement au niveau du compensateur 43.

Lorsque le débit augmente, la différence de pression entre la première chambre de compensation 44 et la seconde chambre de compensation 45 s'accroît, de telle sorte que la membrane de compensation 46 est repoussée vers le bas, entraînant à sa suite la tringle 60 ainsi que l'équipage mobile 56 de l'étage de pilotage.

La force verticale descendante du compensateur vient donc s'ajouter à celle du ressort de tarage 57, ce qui a pour effet d'augmenter la valeur de la première consigne de pression P_{C1}.

A l'inverse, lorsque le débit diminue, ladite consigne décroît également.

En l'absence de tirage, la pression aval P_{AV} remonte, de telle sorte que l'équipage mobile du pilote est repoussé vers le haut et obture l'orifice d'admission 52.

Ceci a pour effet d'isoler la chambre d'actionnement 21 de la portion aval 6B de la vanne, de telle sorte que cette dernière se remplit progressivement, alimentée par le fluide issu de la portion amont 6A qui emprunte le conduit de remplissage amont 59, franchit l'organe de restriction 82, puis s'engage dans la portion correspondante de la tubulure de transmission de commande jusqu'à parvenir à ladite chambre 21.

L'accroissement de la pression d'actionnement P₂₁ qui en résulte a pour effet de repousser le clapet 14 et ainsi de fermer la vanne principale.

Si pour une raison quelconque, et notamment dans l'hypothèse d'une défaillance du pilote principal 30 qui resterait bloqué en position ouverte, la pression aval augmente au point d'atteindre et de dépasser la pression de sécurité P_{S}, alors c'est le pilote auxiliaire 31 qui réagit, puisque l'effort exercé par la pression régnant dans l'étage de commande 67 dépasse la force du ressort de tarage 68 et provoque le déplacement de l'obturateur de régulation 65 jusqu'à ce que celui-ci vienne s'appliquer contre l'entrée 64.

Ce faisant, le pilote auxiliaire isole la chambre d'actionnement 21 de la portion aval 6B de la vanne 2, ce qui provoque, tel que décrit plus haut, la restriction de la section de passage 7, voire la fermeture complète de ladite vanne auparavant laissée ouverte par le pilote principal.

Simultanément, le pilote auxiliaire coupe par la même occasion l'alimentation du pilote principal 30, en interrompant la communication de fluide entre chambre d'actionnement et l'étage d'écoulement dudit pilote principal 30.

Avantageusement, la vanne 2 ne se retrouve toutefois pas dans un état bloqué en position de fermeture, puisque le pilote auxiliaire 31 est capable de réguler à son tour le fonctionnement de ladite vanne, plus particulièrement de suivre une loi de régulation de pression selon une consigne qui correspond sensiblement à la pression de sécurité.

Avantageusement, le pilote principal 30 défectueux, bloqué en position ouverte, se comporte alors comme un simple élément de conduite reliant la sortie 66 du régulateur 32 à la conduite 40 qui permet l'écoulement du fluide issu de la chambre d'actionnement 21 et du conduit de remplissage 59 jusqu'à la portion aval 6B, et ne gêne pas la régulation opérée par le pilote auxiliaire 31.

On conserve ainsi la possibilité de tirer de l'eau au niveau des utilisateurs 4, 5, même si l'asservissement du réseau, et plus particulièrement de la vanne 2, s'opère temporairement selon un (second) mode simplement régulé et non modulé, c'est-à-dire dans des conditions légèrement « *dégradées »* mais pas néfastes pour le réseau.

Avantageusement, l'invention conforme à l'invention permet donc de préserver sensiblement les fonctions essentielles du réseau, et évite en cas de défaillance du premier pilote 30 d'avoir à recourir à la condamnation complète de la vanne, voire d'un tronçon entier de réseau, en attendant l'opération de maintenance qui s'impose.

Avantageusement, la présente invention permet d'améliorer la fiabilité des vannes et des réseaux au moyen d'une technologie disponible et éprouvée, et permet de garantir un fonctionnement sûr et régulier du réseau, y compris en cas de défaillance de certains de ses éléments.

En particulier, elle permet à la vanne et au réseau de s'adapter et de se reconfigurer avec une bonne réactivité en cas de défaillance de l'un de leurs éléments constitutifs, tout en sauvegardant la fonctionnalité principale du réseau et sa capacité à acheminer un fluide.

A titre d'exemple, on pourra notamment dimensionner le dispositif comme décrit dans le tableau 1 ci-dessous, ces dimensions étant bien entendu susceptibles d'être adaptées en fonction des dimensions du réseau et de la vanne ainsi que des contraintes de gestion dudit réseau :

**Tableau 1**

| Pression amont P_{AM} | Diamètre amont (conduite amont 11) | Diamètre diaphragme 49 | Diamètre aval (conduite aval 13) | Débit minimal souhaité | Débit maximal souhaité | Consigne pilote principal | | Pression de sécurité P_{S} |
|---|---|---|---|---|---|---|---|---|
| | | | | | | Consigne pression basse P_{MIN} | Consigne de pression haute P_{MAX} | |
| 12 bar | 100 mm | 62 mm | 100 mm | 3 L/S | 25 L/S | 4 bar | 7 bar | 7,5 bar |

### POSSIBILITE D'APPLICATION INDUSTRIELLE

L'invention trouve son application industrielle dans la conception, la fabrication et l'utilisation de vannes à régulation de pression pour des réseaux de distribution de fluide et en particulier d'eau.

## Revendications

1. - Dispositif de pilotage (1) automatique pour vanne (2) d'un réseau (3) de distribution de fluide comportant une double commande sécurisée comprenant :
- d'une part un premier pilote principal (30) conçu pour commander la modification d'une section de passage (7) variable de la vanne (2) afin de réguler la pression aval (P_{AV}) de ladite vanne sensiblement suivant une première consigne de pression (P_{C1}) inférieure ou égale à une valeur nominale haute prédéterminée (P_{MAX}). la vanne (2) étant pourvue d'un organe obturateur mobile (14) dont la position détermine la section de passage (7), du genre clapet, et le dispositif de pilotage comportant des moyens d'actionnement (20) liés fonctionnellement au pilote principal (30) et aptes à entraîner ledit organe obturateur (14),
- et d'autre part un second pilote auxiliaire (31) de sécurité conçu pour intervenir automatiquement si la pression aval (P_{AV}) atteint ou dépasse une valeur de sécurité (P_{S}) supérieure à la valeur nominale haute (P_{MAX}), afin de commander la restriction de la section de passage (7) de la vanne (2),
**caractérisé en ce que** le pilote auxiliaire (31) est interposé entre lesdits moyens d'actionnement (20) et le pilote principal (30) de sorte à pouvoir interrompre, lorsqu'il se déclenche, et au moins temporairement, la liaison fonctionnelle existant entre le pilote principal (30) et lesdits moyens d'actionnement (20).

2. - Dispositif de pilotage selon la revendication 1 **caractérisé en ce que** le pilote auxiliaire (31) comprend un régulateur de pression (32) distinct du pilote principal (30) et apte à réguler la pression aval (P_{AV}) de la vanne suivant une seconde consigne de pression (P_{C2}) prédéterminée.

3. - Dispositif de pilotage selon la revendication 2 **caractérisé en ce que** la seconde consigne de pression (P_{C2}) est fixée à une valeur supérieure à la valeur nominale haute (P_{MAX}), et de préférence sensiblement égale à la valeur de sécurité (P_{S}).

4. - Dispositif de pilotage selon l'une des revendications précédentes **caractérisé en ce que**, la vanne étant pourvue d'un organe obturateur mobile (14) dont la position détermine la section de passage (7), tel qu'un clapet, ledit dispositif de pilotage comporte des moyens d'actionnement (20) communs qui sont aptes à entraîner ledit obturateur mobile (14) en déplacement sous la commande soit du pilote principal (30), soit du pilote auxiliaire (31).

5. - Dispositif de pilotage selon l'une des revendications précédentes **caractérisé en ce que** le pilote principal (30) et le pilote auxiliaire (31) sont conçus pour être alimentés en énergie uniquement par le fluide présent dans le réseau (3) auquel doit se raccorder la vanne (2) qu'ils équipent.

6. - Dispositif de pilotage selon l'une des revendications précédentes **caractérisé en ce que** le pilote principal forme un modulateur de pression (42) comportant un compensateur automatique (43) qui permet de modifier dynamiquement la première consigne de pression (P_{C1}) en fonction du débit de fluide traversant la vanne.

7. - Dispositif de pilotage selon la revendication 6 **caractérisé en ce que** le compensateur (43) présente une première chambre de compensation (44) et une seconde chambre de compensation (45) séparées par un organe de compensation mobile (46) étanche, du genre membrane de compensation, lesdites chambres étant reliées respectivement à une première prise de pression de compensation (47) et une seconde prise de pression de compensation (48) disposées de part et d'autre d'un diaphragme (49) disposé dans le canal d'écoulement emprunté par le fluide, et de préférence logé dans la portion amont (6A) de la vanne (2).

8. - Dispositif de pilotage selon l'une des revendications précédentes **caractérisé en ce que** le pilote principal (30) comporte un étage de pilotage (50) comprenant une chambre d'écoulement (51) qui est pourvue d'une part d'un orifice d'admission (52) raccordé à une chambre d'actionnement (21) elle-même conçue pour déplacer un organe obturateur mobile (14) de la vanne (2), du genre clapet, afin de modifier la section de passage (7), et d'autre part d'un orifice d'évacuation (54) raccordé à la portion aval de la vanne, ledit étage de pilotage (50) comprenant également un obturateur (55) porté par un équipage mobile (56) précontraint par un organe de tarage (57), tel qu'un ressort, qui contribue à définir une première consigne de pression (P_{C1}), ledit obturateur (55) coopérant avec l'orifice d'admission (42) de manière à pouvoir alternativement mettre en communication la chambre d'actionnement (21) avec la portion aval (6B) de la vanne (2) afin de provoquer la purge de ladite chambre d'actionnement et l'ouverture de la vanne (2), lorsque la pression aval (P_{AV}) est inférieure à la première consigne de pression (P_{C1}), ou au contraire isoler ladite chambre d'actionnement (21) de sorte à autoriser son remplissage à partir d'un conduit de remplissage amont (59) et ainsi provoquer la fermeture de la vanne (2) lorsque la pression aval atteint ou dépasse la première consigne de pression (P_{C1}).

9. - Dispositif de pilotage selon les revendications 7 et 8 **caractérisé en ce que** l'équipage mobile (56) de l'étage de pilotage (50) est solidarisé à l'organe mobile de compensation (46), de préférence au moyen d'une tringle (60) rigide qui coulisse de manière étanche à travers un palier (61) percé dans une cloison (62) séparant la chambre d'écoulement (51) des chambres de compensation (44, 45).

10. -Dispositif de pilotage selon la revendication 8 **caractérisé en ce que** le pilote auxiliaire (31) est formé par un régulateur de pression (32) comprenant d'une part une chambre de circulation (63), qui comporte une entrée (64) coopérant avec un obturateur de régulation (65) et qui est raccordée à la chambre d'actionnement (21) de la vanne (2), ainsi qu'une sortie (66) reliée à l'orifice d'admission de l'étage de pilotage (50) du pilote principal (30), et d'autre part un étage de commande (67), taré sensiblement à une valeur de sécurité (P_{S}), relié à la portion aval de la vanne par une conduite de prise de pression (41), et contrôlant le déplacement de l'obturateur de régulation (65).

11. -Dispositif de pilotage selon l'une des revendications précédentes **caractérisé en ce qu'**il est conçu de sorte à pouvoir provoquer la fermeture étanche de la vanne sous la commande du pilote principal (30) si la pression aval (P_{AV}) dépasse la première pression de consigne (P_{C1}), respectivement sous la commande du pilote auxiliaire (31) si la pression aval (P_{AV}) dépasse la pression de sécurité (P_{S}).

12. -Dispositif de pilotage selon l'une des revendications précédentes **caractérisé en ce que** le pilote principal (30) et le pilote auxiliaire (31) possèdent chacun leur propre circuit de prise de pression (40, 41) de sorte à pouvoir détecter séparément la pression aval (P_{AV}).

13. -Dispositif de pilotage selon l'une des revendications précédentes **caractérisé en ce qu'**il comporte des moyens de signalisation permettant de signaler le déclenchement du pilote auxiliaire (31).

14. -Vanne destinée à être montée sur un réseau de distribution de fluide **caractérisée en ce qu'**elle est pourvue d'un dispositif de pilotage conforme à l'une des revendications 1 à 13.

15. -Réseau d'adduction d'eau **caractérisé en ce qu'**il comporte au moins une vanne (2) conforme à la revendication 14.

16. -Procédé de pilotage automatique de la pression dans un réseau de distribution de fluide comportant une étape (a) de détection de la pression régnant en aval d'une vanne, et comportant une étape (b) de sélection automatique de mode de fonctionnement au cours de laquelle le réseau adopte alternativement et automatiquement soit un premier mode de fonctionnement régulé normal, tant que la pression aval relevée est inférieure ou égale à une valeur nominale haute prédéterminée (P_{MAX}), mode de fonctionnement dans lequel on fait intervenir un premier pilote (30) pour réguler automatiquement la pression aval, par ajustement de la section de passage variable de la vanne, suivant une première consigne de pression (P_{C1}) inférieure ou égale à ladite valeur nominale haute (P_{MAX}), soit, si la pression aval dépasse une valeur de sécurité (P_{S}) supérieure à la valeur nominale haute (P_{MAX}), un second mode de mise en sécurité dans lequel on fait intervenir un second pilote (31) distinct du premier pilote (30) afin de forcer la restriction de la section de passage de la vanne, **caractérisé en ce que** le second pilote (31) se comporte comme un coupe-circuit capable de déconnecter au moins temporairement, sinon définitivement, le premier pilote (30).

## Patentansprüche

1. Automatische Steuervorrichtung (1) für ein Ventil (2) eines Netzes (3) zum Verteilen von Flüssigkeiten, enthaltend eine zweifache Sicherheitssteuerung, umfassend:
- einerseits einen ersten Haupttreiber (30), der zum Steuern eines variablen Durchgangsabschnitts (7) des Ventils (2) ausgelegt ist, sodass der Ausgangsdruck (P_{AV}) des Ventils im Wesentlichen gemäß einem ersten Druck-Sollwert (P_{C1}) reguliert wird, der kleiner oder gleich einem vorgegebenen hohen Nominalwert (P_{MAX}) ist, wobei das Ventil (2) versehen ist mit einem beweglichen Verschlussstück (14) vom Typ Klappe, dessen Stellung den Durchgangsabschnitt (7) bestimmt, und wobei die Steuervorrichtung weiter Betätigungsmittel (20) umfasst, die funktionsmäßig mit dem Haupttreiber (30) verbunden und geeignet sind, das Verschlussstück (14) anzutreiben,
- und andererseits einen zweiten Sicherheitshilfstreiber (31), der dazu ausgelegt ist, automatisch zu intervenieren, wenn der Ausgangsdruck (P_{AV}) einen Sicherheitswert (P_{S}) erreicht oder überschreitet, der höher als der hohe Nominalwert (P_{MAX}) ist, sodass die Einschränkung des Durchgangsabschnitts (7) des Ventils (2) kontrolliert wird,
**dadurch gekennzeichnet, dass** der Hilfstreiber (31) so zwischen den Betätigungsmitteln (20) und dem Haupttreiber (30) liegt, dass er, wenn er sich einschaltet, zumindest temporär die funktionsmäßige Verbindung zwischen dem Haupttreiber (30) und den Betätigungsmitteln (20) unterbrechen kann.

2. Steuervorrichtung nach Anspruch 1 **dadurch gekennzeichnet, dass** der Hilfstreiber (31) einen von dem Haupttreiber (30) separaten Druckregler (32) umfasst, der geeignet ist, den Ausgangsdruck (P_{AV}) des Ventils gemäß einem zweiten vorgegebenen Druck-Sollwert (P_{C2}) zu regulieren.

3. Steuervorrichtung nach Anspruch 2, **dadurch gekennzeichnet, dass** der zweite Druck-Sollwert (P_{C2}) auf einen Wert gesetzt wird, der höher als der hohe Nominalwert (P_{MAX}) ist, bevorzugt im Wesentlichen gleich dem Sicherheitswert (P_{S}).

4. Steuervorrichtung nach einem der vorangehenden Ansprüche, **dadurch gekennzeichnet, dass** das Ventil mit einem beweglichen Verschlussstück (14), wie einer Klappe, versehen ist, dessen Stellung den Durchgangsabschnitt (7) bestimmt, wobei die Steuervorrichtung gemeinsame Betätigungsmittel (20) umfasst, die geeignet sind, das bewegliche Verschlussstück (14) unter Steuerung des Haupttreibers (30) oder des Hilfstreibers (31) zu einer Bewegung anzutreiben.

5. Steuervorrichtung nach einem der vorangehenden Ansprüche, **dadurch gekennzeichnet, dass** der Haupttreiber (30) und der Hilfstreiber (31) dazu ausgelegt sind, nur durch die in dem Netz (3), mit dem sich das mit diesen ausgestattete Ventil (2) verbinden muss, vorhandene Flüssigkeit mit Energie versorgt zu werden.

6. Steuervorrichtung nach einem der vorangehenden Ansprüche, **dadurch gekennzeichnet, dass** der Haupttreiber einen Druckmodulator (42) bildet, der einen automatischen Kompensator (43) umfasst, der es ermöglicht, den ersten Druck-Sollwert (P_{C1}) in Abhängigkeit von der durch das Ventil laufenden Flüssigkeitsströmung dynamisch zu modifizieren.

7. Steuervorrichtung nach Anspruch 6, **dadurch gekennzeichnet, dass** der Kompensator(43) eine erste Ausgleichskammer (44) und eine zweite Ausgleichskammer (45) aufweist, die durch ein dichtes bewegliches Ausgleichsorgan (46) vom Typ Ausgleichsmembran getrennt sind, wobei die Kammern jeweils mit einem ersten Ausgleichsdruckaufnehmer (47) und einem zweiten Ausgleichsdruckaufnehmer (48) verbunden sind, die auf beiden Seiten eines Diaphragmas (49) angeordnet sind, das in dem von der Flüssigkeit genutzten Strömungskanal angeordnet ist und bevorzugt im vorgelagerten Abschnitt (6A) des Ventils (2) liegt.

8. Steuervorrichtung nach einem der vorangehenden Ansprüche, **dadurch gekennzeichnet, dass** der Haupttreiber (30) eine Steuerstufe (50) aufweist, die eine Strömungskammer (51) umfasst, die einerseits versehen ist mit einer Einlassöffnung (52), die mit einer Betätigungskammer (21) verbunden ist, die selbst dazu ausgelegt ist, ein bewegliches Verschlussstück (14) des Ventils (2) vom Typ Klappe zu verlagern, sodass der Durchgangsabschnitt (7) modifiziert wird, und andererseits mit einer Auslassöffnung (54), die mit dem nachgelagerten Abschnitt des Ventils verbunden ist, wobei die Steuerstufe (50) außerdem einen Verschluss (55) aufweist, der von einem beweglichen Organ (56) getragen wird, das durch ein Einstellorgan (57), wie eine Feder, vorgespannt wird, das dazu beiträgt, einen ersten Druck-Sollwert (P_{C1}) zu bestimmen, wobei der Verschluss (55) mit der Einlassöffnung (42) so zusammenwirkt, dass abwechselnd entweder die Betätigungskammer (21) mit dem nachgelagerten Abschnitt (6B) des Ventils (2) verbunden werden kann, um das Entleeren der Betätigungskammer und das Öffnen des Ventils (2) zu bewirken, wenn der Ausgangsdruck (P_{AV}) geringer als der erste Druck-Sollwert (P_{C1}) ist, oder im Gegensatz dazu die Betätigungskammer (21) isoliert werden kann, sodass ihr Befüllen ausgehend von einem vorgelagerten Einfüllkanal (59) ermöglicht wird, wodurch das Schließen des Ventils (2) bewirkt wird, wenn der Ausgangsdruck den ersten Druck-Sollwert (P_{C1}) erreicht oder überschreitet.

9. Steuervorrichtung nach den Ansprüchen 7 und 8, **dadurch gekennzeichnet, dass** das bewegliche Organ (56) der Steuerstufe (50) fest verbunden ist mit dem beweglichen Ausgleichsorgan (46), bevorzugt mittels eines starren Gestänges (60), das dicht schließend durch ein Lager (61) gleitet, das eine Trennwand (62) durchbohrt, die die Strömungskammer (51) von den Ausgleichskammem (44, 45) separiert.

10. Steuervorrichtung nach Anspruch 8, **dadurch gekennzeichnet, dass** der Hilfstreiber (31) durch einen Druckregler (32) gebildet wird, der einerseits eine Umlaufkammer (63), die einen Einlass (64), der mit einer Regelblende (65) zusammenwirkt und mit der Betätigungskammer (21) des Ventils (2) verbunden ist, sowie einen Auslass (66), der mit der Einlassöffnung der Steuerstufe (50) des Haupttreiber (30) verbunden ist, aufweist, und andererseits eine Schaltstufe (67) umfasst, die im Wesentlichen auf einen Sicherheitswert (P_{S}) austariert ist, mit dem nachgelagerten Abschnitt des Ventils durch eine Druckaufnahmeleitung (41) verbunden ist und die Verlagerung der Regelblende (65) kontrolliert.

11. Steuervorrichtung nach einem der vorangehenden Ansprüche, **dadurch gekennzeichnet, dass** sie so ausgebildet ist, dass sie den dichten Verschluss des Ventils unter Steuerung des Haupttreibers (30) bewirken kann, wenn der Ausgangsdruck (P_{AV}) den ersten Druck-Sollwert (P_{C1}) überschreitet, bzw. unter Steuerung des Hilfstreibers (31), wenn der Ausgangsdruck (P_{AV}) den Sicherheitsdruck (Ps) überschreitet.

12. Steuervorrichtung nach einem der vorangehenden Ansprüche, **dadurch gekennzeichnet, dass** der Haupttreiber (30) und der Hilfstreiber (31) jeweils über ihre eigene Druckaufnahmeschaltung (40, 41) verfügen, sodass der Ausgangsdruck (P_{AV}) separat nachgewiesen werden kann.

13. Steuervorrichtung nach einem der vorangehenden Ansprüche, **dadurch gekennzeichnet, dass** sie Anzeigemittel aufweist, die es ermöglichen, auf das Auslösen des Hilfstreibers (31) hinzuweisen.

14. Ventil, das dazu bestimmt ist, in einem Netz zum Verteilen von Flüssigkeiten angebracht zu werden, **dadurch gekennzeichnet, dass** es mit einer Steuervorrichtung nach einem der Ansprüche 1 bis 13 versehen ist.

15. Wasserversorgungsnetz, **dadurch gekennzeichnet, dass** es mindestens ein Ventil (2) nach Anspruch 14 aufweist.

16. Verfahren zum automatischen Steuern des Drucks in einem Netz zum Verteilen von Flüssigkeiten, umfassend einen Schritt (a) zum Nachweis des dem Ventil nachgelagert herrschenden Drucks, und umfassend einen Schritt (b) zur automatischen Auswahl des Betriebsmodus, bei dem das Netz abwechselnd und automatisch entweder einen normal regulierten ersten Betriebsmodus anwendet, solange der ermittelte Ausgangsdruck geringer oder gleich einem vorgegebenen hohen Nominalwert (P_{MAX}) ist, wobei dies ein Betriebsmodus ist, bei dem ein erster Treiber (30) eingeschaltet wird, um den Ausgangsdruck durch Anpassen des variablen Durchgangsabschnitts des Ventils gemäß einem ersten Druck-Sollwert (P_{C1}) automatisch zu regulieren, der geringer oder gleich dem hohen Nominalwert (P_{MAX}) ist, oder, wenn der Ausgangsdruck einen Sicherheitswert (P_{S}) überschreitet, der höher ist als der hohe Nominalwert (P_{MAX}), einen zweiten Absicherungsmodus anwendet, bei dem ein von dem ersten Treiber (30) getrennter zweiter Treiber (31) eingeschaltet wird, sodass die Einschränkung des Durchgangsabschnitts des Ventils erzwungen wird, **dadurch gekennzeichnet, dass** der zweite Treiber (31) sich wie eine Schutzschaltereinrichtung verhält, die in der Lage ist, zumindest temporär, wenn nicht sogar definitiv, den ersten Treiber (30) zu trennen.

## Claims

1. Automatic control device (1) for a valve (2) in a fluid-distribution network (3), comprising a protected double control comprising:
- firstly a first main control (30) designed to control the modification of a variable cross section of flow (7) of the valve (2) in order to regulate the pressure (P_{AV}) downstream of said valve substantially according to a first pressure set point (P_{C1}) lower than or equal to a predetermined high nominal value (P_{MAX}), the valve (2) being provided with a movable obturator member (14) the position of which determines the cross section of flow (7), of the flap type, and the control device comprising actuation means (20) functionally connected to the main control (30) and able to drive said obturator member (14),
- and secondly a second auxiliary safety control (31) designed to act automatically if the downstream pressure (P_{AV}) reaches or exceeds a safety value (P_{S}) higher than the high nominal value (P_{MAX}), in order to control the restriction of the cross section of flow (7) of the valve (2),
**characterised in that** the auxiliary control (31) is interposed between said actuation means (20) and the main control (30) so as to be able to interrupt, when it is triggered, and at least temporarily, the functional connection existing between the main control (30) and said actuation means (20).

2. Control device according to claim 1, **characterised in that** the auxiliary control (31) comprises a pressure regulator (32) distinct from the main control (30) and able to regulate the pressure (P_{AV)} downstream of the valve according to a second predetermined pressure set point (P_{C2}).

3. Control device according to claim 2, **characterised in that** the second pressure set point (P_{C2}) is fixed at a value higher than the high nominal value (P_{MAX}), and preferably substantially equal to the safety value (P_{S}).

4. Control device according to any of the preceding claims, **characterised in that**, the valve being provided with a movable obturator member (14) the position of which determines the cross section of flow (7), such as a flap, said control device comprises common actuation means (20) that are able to move said movable obturator (14) under the control either of the main control (30) or of the auxiliary control (31).

5. Control device according to any of the preceding claims, **characterised in that** the main control (30) and the auxiliary control (31) are designed so as to be supplied with energy only by the fluid present in the network (3) to which the valve (2) that they equip must be connected.

6. Control device according to any of the preceding claims, **characterised in that** the main control forms a pressure modulator (42) comprising an automatic compensator (43) that makes it possible to dynamically modify the first pressure set point (P_{C1}) according to the flow of fluid passing through the valve.

7. Control device according to claim 6, **characterised in that** the compensator (43) has a first compensation chamber (44) and a second compensation chamber (45) separated by a fluidtight movable compensation member (46) of the compensation membrane type, said chambers being connected respectively to a first compensation pressure tapping (47) and a second compensation pressure tapping (48) disposed on either side of a diaphragm (49) disposed in the flow channel followed by the fluid, and preferably housed in the upstream portion (6A) of the valve (2).

8. Control device according to any of the preceding claims, **characterised in that** the main control (30) comprises a control stage (50) comprising a flow chamber (51) that is provided firstly with an admission orifice (52) connected to an actuation chamber (21) itself designed so as to move a movable obturator member (14) of the valve (2), of the flap type, in order to modify the cross section of flow (7), and secondly a discharge orifice (54) connected to the downstream portion of the valve, said control stage (50) also comprising an obturator (55) carried by a movable element (56) prestressed by a calibration member (57), such as a spring, which helps to define a first pressure set point (P_{C1}), said obturator (55) cooperating with the admission orifice (42) so as to be able to alternately put the actuation chamber (21) in communication with the downstream portion (6B) of the valve (2) in order to cause the drainage of said actuation chamber and the opening of the valve (2), when the downstream pressure (P_{AV}) is less than the first pressure set point (P_{C1}), or on the other hand to isolate said actuation chamber (21) so as to allow filling thereof from an upstream filling pipe (59) and thus cause the closure of the valve (2) when the downstream pressure reaches or exceeds the first pressure set point (P_{C1}).

9. Control device according to claim 7 and claim 8, **characterised in that** the movable element (56) of the control stage (50) is secured to the movable compensation member (46), preferably by means of a rigid linkage (60) that slides sealingly through a bearing (61) which is pierced in a partition (62) separating the flow chamber (51) from the compensation chambers (44, 45).

10. Control device according to claim 8, **characterised in that** the auxiliary control (31) is formed by a pressure regulator (32) comprising firstly a circulation chamber (63), which comprises an inlet (64) cooperating with a regulation obturator (65) and is connected to the actuation chamber (21) of the valve (2), and an outlet (66) connected to the admission orifice of the control stage (50) of the main control (30), and secondly a control stage (67), calibrated substantially at a safety value (P_{S}), connected to the downstream portion of the valve by a pressure tapping pipe (41), and controlling the movement of the regulation obturator (65).

11. Control device according to any of the preceding claims, **characterised in that** it is designed so as to be able to cause the fluidtight closure of the valve under the control of the main control (30) if the downstream pressure (P_{AV}) exceeds the first set-point pressure (P_{C1}), and respectively under the control of the auxiliary control (31) if the downstream pressure (P_{AV}) exceeds the safety pressure (P_{S}).

12. Control device according to any of the preceding claims, **characterised in that** the main control (30) and the auxiliary control (31) each have their own pressure tapping circuit (40, 41) so as to be able to detect the downstream pressure (P_{AV}) separately.

13. Control device according to any of the preceding claims, **characterised in that** it comprises signalling means for signalling the triggering of the auxiliary control (31).

14. Valve intended to be mounted on a fluid-distribution network, **characterised in that** it is provided with a control device according to any of claims 1 to 13.

15. Water-conveying network, **characterised in that** it comprises at least one valve (2) according to claim 14.

16. Method for the automatic control of the pressure in a fluid-distribution network, comprising a step (a) of detecting the pressure prevailing downstream of a valve, and comprising a step (b) of automatic operating-mode selection during which the network adopts, alternately and automatically, either a first normal regulated operating mode, as long as the downstream pressure recorded is lower than or equal to a predetermined high nominal value (P_{MAX}), an operating mode in which a first control (30) is involved in order to automatically regulate the downstream pressure, by adjustment of the variable cross section of flow of the valve, according to a first pressure set point (P_{C1}) lower than or equal to said high nominal value (P_{MAX}), or, if the downstream pressure exceeds a safety value (P_{S}) higher than the high nominal value (P_{MAX}), a second safety mode in which a second control (31) distinct from the first control (30) is involved in order to force the restriction of the cross section of flow of the valve, **characterised in that** the second control (31) behaves as a circuit breaker capable of at least temporarily, if not definitively, disconnecting the first control (30).
